# EUROPÄISCHE PATENTANMELDUNG

(11) **EP 1 413 818 A1**
(43) Veröffentlichungstag der Anmeldung: **28.04.2004**
(21) Anmeldenummer: 03018884.1
(22) Anmeldetag: 20.08.2003
(51) Int. Cl.: F16L 33/207

(54) **Schlauchverbindung**

(30) Priorität: 22.10.2002 DE 10249043
(71) Anmelder: ContiTech Schlauch GmbH, 30165 Hannover (DE)
(72) Erfinder: Hecker, Rolf, 34513 Waldbeck-Freienhagen am Edersee (DE); Pohlmann, Reinhard, 34497 Korbach (DE); Lohmüller, Anja, 60435 Frankfurt (DE)
(74) Vertreter: Finger, Karsten

(57) **Zusammenfassung**

Die Erfindung betrifft eine Schlauchverbindung (1), insbesondere Hochdruck-Schlauchverbindung, umfassend einen rohrförmigen Nippel (2) mit wenigstens einem radial umlaufenden nach außen gerichteten Vorsprung (3), einen Schlauch (4), der mit seinem Endabschnitt (5) auf den Nippel (2) aufgesteckt ist, wobei der wenigstens eine nach außen gerichtete Vorsprung des Nippels im Innenraum (6) des Schlauchendabschnitts angeordnet ist, und eine beidseitig geöffnete Hülse (7), die auf dem Schlauchendabschnitt angeordnet und durch radiale äußere Krafteinwirkung derart verformt ist, dass der Schlauchendabschnitt zwischen Nippel und Hülse eingeklemmt ist. Die Hülse weist dabei wenigstens einen radial umlaufenden nach innen gerichteten Vorsprung (8) auf, wobei der wenigstens eine nach innen gerichtete Vorsprung der Hülse in Relation zu wenigstens einem der nach außen gerichteten Vorsprünge des Nippels näher am Ende des aufgesteckten Schlauchendabschnitts angeordnet ist.

Erfindungsgemäß ist die Innenfläche des aufgesteckten Schlauchendabschnitts vollständig auf dem Nippel angeordnet, und die Hülse ist derart verformt, dass sie mit einen Abschnitt die Stirnseite (11) des Schlauchendes wenigstens größtenteils umgreift, ohne dass hierbei ein Hohlraum zwischen den aneinander liegenden Flächen der Stirnseite und des Hülsenabschnitts entsteht, und dass die Hülse weder direkt mit dem Nippel verbunden noch am Nippel befestigt ist.

## Beschreibung

Die Erfindung betrifft eine Schlauchverbindung nach dem Oberbegriff des Anspruchs 1.

Aus der DE 40 03 379 C2 ist eine Hochdruck-Schlauchverbindung bekannt, die einen Nippel bzw. einen Rohrstutzen sowie eine rohrförmige manschettenartige Hülse, die am Nippel befestigt ist, umfasst. Zur Herstellung der Schlauchverbindung ist die manschettenartige Hülse am Nippel mittels eines gebogenen Endes der Hülse befestigt. Das gebogene Ende der Hülse greift hierbei in einen Absatz ein, der dafür im Nippel vorgesehen ist. Das Befestigen der Hülse am Nippel kann auf irgendeine bekannte Art und Weise bewerkstelligt werden, beispielsweise mittels Kröpfung, Stauchung, Umbördelung oder dergleichen. Der Nippel ist mit axial beabstandeten, nach außen ragenden Wülsten oder Rippen versehen. Der Schlauch, der aus irgendeinem geeigneten Schlauchmaterial besteht, ist innerhalb des Raumes zwischen Nippel und Hülse angeordnet. Der innere Durchmesser der manschettenartigen Hülse, deren Innenfläche glatt ist, und der äußere Durchmesser der nach außen ragenden Wülste oder Rippen sind dabei derart ausgewählt, dass der Schlauch in den Raum über den Nippel geschoben werden kann, oder der Nippelabschnitt leicht in den Schlauch eingeführt werden kann, ohne dass der Schlauch beschädigt wird.

Der Schlauch wird dadurch im Zwischenraum gehalten, dass nach einer Expansion des Nippels die Hülse innerhalb des Bereichs des expandierten Nippels komprimiert, d.h. zusammengepresst wird. Die Komprimierung kann hierbei durch Einwalzen von ringförmigen Einbauchungen erfolgen, die radial umlaufende nach innen gerichtete Vorsprünge bilden. Um die Rückhaltfähigkeit der Schlauchverbindung zu erhöhen, sind die größten Tiefen der ringförmigen eingewalzten Einbauchungen zwischen den Scheitelpunkten der ringförmigen Wülste oder Rippen des Nippels angeordnet.

Eine derartige, relativ einfach und kostengünstig herzustellende Hochdruck-Schlauchverbindung ist hinsichtlich ihrer Undurchlässigkeit für die durch den Schlauch strömenden Fluide geeignet. Es hat sich jedoch herausgestellt, dass gerade unerwartet hohe Drücke immer wieder zum Ausreißen des Nippels aus der Hülse führen, wodurch der Schlauch insgesamt vom Nippel abplatzt und das Fluid aus dem Schlauch ins Freie strömt.

Ausgehend von diesem Stand der Technik liegt der Erfindung die Aufgabe zugrunde, eine Schlauchverbindung der eingangs genannten Art dahingehend zu verbessern, dass der Schlauch auch bei sehr hohen Drücken sicher am Nippel befestigt ist.

Diese Aufgabe wird bei einer Schlauchverbindung nach dem Oberbegriff des Anspruchs 1 durch die Merkmale des Anspruchs 1 gelöst. Weiterbildungen und vorteilhafte Ausgestaltungen ergeben sich aus den Unteransprüchen.

Die Lösung der gestellten Aufgabe basiert auf der Erkenntnis, dass das Ausreißen des Nippels aus der nach dem Stand der Technik fest mit dem Nippel verbundenen Hülse dadurch erfolgt, dass hohe Drücke die Hülse und den Nippel mit entgegengesetzt wirkenden Zugkräften beaufschlagen. Diese Zugkräfte sind derart groß, dass sie den Nippel aus der Hülse reißen, wobei der Schlauch vom Nippel abplatzt.

Unter einem Nippel soll erfindungsgemäß ein rohrförmiger Abschnitt verstanden werden, auf den der Schlauch befestigt wird, um diesen mit einem Gegenstück zu verbinden. Ein Nippel kann somit Teil eines Rohrstutzens oder jedes anderen Verbindungsstücks sein.

Der Grundgedanke der Erfindung besteht darin, eine dynamische Befestigung des Schlauches zwischen Nippel und Hülse zu schaffen, welche mit zunehmender Stärke der auftretenden Zugkräfte ebenfalls stärker wird. Dazu ist die Innenfläche des aufgesteckten Schlauchendabschnitts vollständig mit dem Nippel in Berührung, und die Hülse ist erfindungsgemäß nicht mehr statisch mit dem Nippel verbunden, sondern derart verformt, dass sie mit einen Abschnitt die Stirnseite des Schlauchendes wenigstens größtenteils umgreift, ohne dass hierbei ein Hohlraum zwischen den aneinander liegenden Flächen der Stirnseite und des Hülsenabschnitts vorhanden ist. Die Hülse ist weder direkt mit dem Nippel verbunden noch am Nippel befestigt.

Durch die erfindungsgemäße Schlauchverbindung wird verhindert, dass bei hohen Drücken und den dadurch hervorgerufenen großen Zugkräften, der Nippel aus der Hülse ausreißt. Statt einer statischen, also festen Verbindung zwischen Nippel und Hülse ist erfindungsgemäß eine dynamische, formschlüssige Verbindung vorgesehen, die auch bei hohen Drücken nicht zum Abplatzen des Schlauches vom Nippel führt.

Dies ist auf mehrere zusammenwirkende Faktoren zurückzuführen. Zunächst entsteht dadurch, dass die Innenfläche des aufgesteckten Schlauchendabschnitts vollständig mit dem Nippel in Berührung steht, eine Reibungskraft, die der Zugkraft des Nippels entgegen wirkt. Durch die Verformung der Hülse, derart, dass sie mit einen Abschnitt die Stirnseite des Schlauchendes wenigstens größtenteils umgreift, ohne dass hierbei ein Hohlraum zwischen den aneinander liegenden Flächen der Stirnseite und des Hülsenabschnitts besteht, wird eine dynamische Zone erzeugt, in der dynamische Kräfte wirken. Je größer die Zugkraft des Nippels, desto größer werden die der Zugkraft entgegengesetzt wirkenden Kräfte der dynamischen Zone. Die dynamische Zone bildet sich zwischen dem Hülsenabschnitt, der die Stirnseite des Schlauchendes umgreift, und dem nächstgelegenen nach außen gerichteten Vorsprung des Nippels aus. Für die Ausbildung einer optimalen dynamischen Zone mit sehr guter Kraftverteilung ist zwischen den aneinander liegenden Flächen der Stirnseite und des Hülsenabschnitts kein Hohlraum vorhanden. Damit keine statische Verbindung zwischen Hülse und Nippel entsteht, ist die Hülse erfindungsgemäß weder direkt mit dem Nippel verbunden noch am Nippel befestigt.

Eine Weiterbildung der Erfindung sieht vor, dass der innere Durchmesser am Ende des die Stirnseite umgreifenden Hülsenabschnitts kleiner ist als der Durchmesser des nächstgelegenen nach außen gerichteten Vorsprungs des Nippels.

Dadurch wird eine zusätzliche mechanische Sicherung geschaffen, die dann, wenn die Zugkräfte derart groß sind, dass sich der Nippel und der Verbund aus Schlauch und Hülse gegeneinander verschieben, eingreift. Das Ende des Hülsenabschnitts gelangt hierbei in Anschlag mit dem nächstgelegenen Vorsprung des Nippels, wodurch ein Abplatzen des Schlauches vom Nippel verhindert wird.

Nachfolgend wird die Erfindung anhand eines Ausführungsbeispiels erläutert, das in der Zeichnung dargestellt ist. In dieser zeigt:

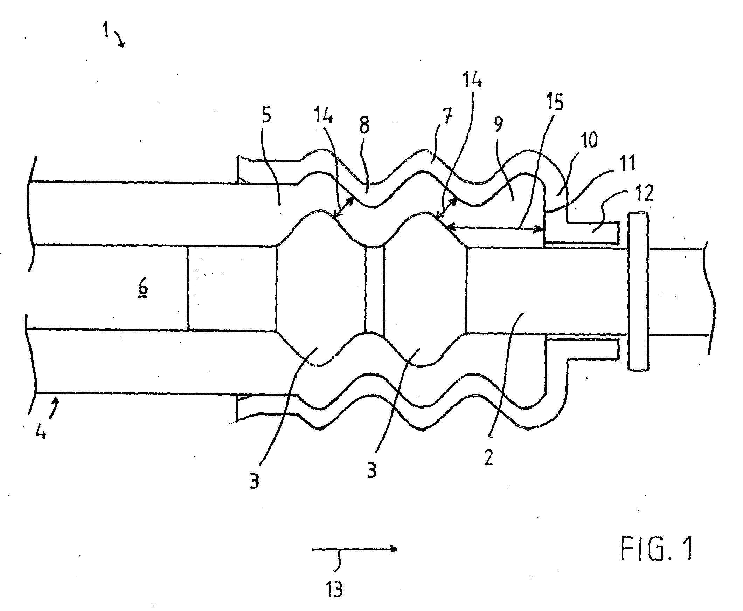

- Fig. 1: eine schematische Darstellung der erfindungsgemäßen Schlauchverbindung im Querschnitt.

Die in Fig. 1 dargestellte Hochdruck-Schlauchverbindung 1 umfasst einen rohrförmigen Nippel 2 mit zwei radial umlaufenden nach außen gerichteten Vorsprüngen 3, und einen Schlauch 4, der mit seinem Endabschnitt 5 auf den Nippel 2 aufgesteckt ist. Die nach außen gerichteten Vorsprünge 3 des Nippels 2 sind hierbei im Innenraum 6 des Schlauchendabschnitts 5 angeordnet. Weiterhin umfasst die Hochdruck-Schlauchverbindung 1 eine beidseitig geöffnete Hülse 7, die auf dem Schlauchendabschnitt 5 angeordnet ist. Diese Hülse 7 ist durch radiale äußere Krafteinwirkung derart verformt, dass der Schlauchendabschnitt 5 zwischen dem Nippel 2 und der Hülse 7 eingeklemmt ist.

Die Hülse 7 weist zwei radial umlaufende nach innen gerichtete Vorsprünge 8 auf, die durch Verformung der Hülse 7, beispielsweise durch Einwalzen entstehen. Einer der nach innen gerichteten Vorsprünge 8 der Hülse 7 ist hierbei in Relation zu einem der nach außen gerichteten Vorsprünge 3 des Nippels 2 näher am Ende 9 des aufgesteckten Schlauchendabschnitts 5 angeordnet. Der andere der nach innen gerichteten Vorsprünge 8 der Hülse 7 befindet sich zwischen den nach außen gerichteten Vorsprüngen 3 des Nippels 2. Durch diese Anordnung der Vorsprünge 3, 8 entstehen zwei dynamische Zonen, in der sich dynamische Kräfte ausbilden, wenn der Nippel 2 mit einer Zugkraft beaufschlagt wird, deren Richtung in Fig. 1 mit einem Pfeil 13 dargestellt ist. Die dabei in den genannten dynamischen Zonen auftretenden dynamischen Kräfte, die der Zugkraft 13 entgegen wirken, sind in Fig. 1 mit schräg verlaufenden Doppelpfeilen 14 dargestellt. Je größer die Zugkraft 13, desto größer werden die Kräfte 14.

Die Innenfläche des aufgesteckten Schlauchendabschnitts 5 ist vollständig auf dem Nippel 2 angeordnet. Wenn der Nippel 2 mit einer Zugkraft in Richtung 13 beaufschlagt wird, bildet sich dadurch zwischen dem Nippel 2 und dem Schlauchendabschnitt 5 eine Reibungskraft aus, die der Zugkraft 13 entgegen wirkt und den Schlauchendabschnitt 5 auf dem Nippel 2 hält.

Zusätzlich ist die Hülse 7 derart verformt ist, dass sie mit einen Abschnitt 10 die Stirnseite 11 des Schlauchendes 9 fast vollständig umgreift, ohne dass hierbei ein Hohlraum zwischen den aneinander liegenden Flächen der Stirnseite 10 und des Hülsenabschnitts 10 besteht. Wenn der Nippel 2 mit einer Zugkraft in Richtung 13 beaufschlagt wird, entsteht eine weitere dynamische Zone, in der sich dynamische Kräfte ausbilden, die der Zugkraft 13 entgegen wirken und den Schlauchendabschnitt 5 auf dem Nippel 2 halten. Die dabei in der genannten dynamischen Zone auftretenden Kräfte sind in Fig. 1 mit einem horizontal verlaufenden Doppelpfeil 15 dargestellt. Je größer die Zugkraft 13, desto größer werden die Kräfte 15.

Dadurch, dass die Hülse 7 weder direkt mit dem Nippel 2 verbunden noch am Nippel 2 befestigt ist, besteht keine statische Befestigung des Schlauches 4 am Nippel 2. Die Stärke der Befestigung ist von der Stärke der Zugkraft 13 abhängig. Je größer die Zugkraft 13 am Nippel 2, desto größer werden die Kräfte 14, 15 der dynamischen Zonen, und desto stärker wird der Schlauch 5 am Nippel 2 befestigt. Ein Ausreißen des Nippels 2 aus der Hülse 7 wird verhindert.

Sollten die der Zugkraft 13 des Nippels 2 entgegen wirkenden Kräfte 14, 15 nicht ausreichen, um den Schlauch 4 auf dem Nippel 2 zu halten, ist als letztere Sicherung vorgesehen, dass der innere Durchmesser am Ende 12 des die Stirnseite 10 des Schlauchendes 9 umgreifenden Hülsenabschnitts 10 kleiner ist als der Durchmesser des nächstgelegenen nach außen gerichteten Vorsprungs 3 des Nippels 2. Dadurch, dass sich das Ende 12 an den nächstgelegenen nach außen gerichteten Vorsprung 3 mechanisch anlagert, wird ein Abplatzen des Schlauches 4 vom Nippel 2 vermieden.

### Bezugszeichenliste

### (ist Bestandteil der Beschreibung)

- 1: Schlauchverbindung
- 2: Nippel
- 3: Vorsprung des Nippels
- 4: Schlauch
- 5: Schlauchendabschnitt
- 6: Innenraum des Schlauches
- 7: Hülse
- 8: Vorsprung der Hülse
- 9: Ende des Schlauchendabschnitts
- 10: Abschnitt der Hülse
- 11: Stirnseite des Schlauchendes
- 12: Ende der Hülse
- 13: Zugkraft des Nippels
- 14: Kraft einer dynamischen Zone
- 15: Kraft einer dynamischen Zone

## Patentansprüche

1. Schlauchverbindung (1), insbesondere Hochdruck-Schlauchverbindung, umfassend einen rohrförmigen Nippel (2) mit wenigstens einem radial umlaufenden nach außen gerichteten Vorsprung (3), einen Schlauch (4), der mit seinem Endabschnitt (5) auf den Nippel (2) aufgesteckt ist, wobei der wenigstens eine nach außen gerichtete Vorsprung (3) des Nippels (2) im Innenraum (6) des Schlauchendabschnitts (5) angeordnet ist, und eine beidseitig geöffnete Hülse (7), die auf den Schlauchendabschnitt (5) gesteckt und durch radiale äußere Krafteinwirkung derart verformt ist, dass der Schlauchendabschnitt (5) zwischen Nippel (2) und Hülse (7) eingeklemmt ist und die Hülse (7) dabei wenigstens einen radial umlaufenden nach innen gerichteten Vorsprung (8) aufweist, wobei der wenigstens eine nach innen gerichtete Vorsprung (8) der Hülse (7) in Relation zu wenigstens einem der nach außen gerichteten Vorsprünge (3) des Nippels (2) näher am Ende (9) des aufgesteckten Schlauchendabschnitts (5) angeordnet ist, **dadurch gekennzeichnet, dass** die Innenfläche des aufgesteckten Schlauchendabschnitts (5) vollständig auf dem Nippel (2) angeordnet ist und die Hülse (7) derart verformt ist, dass sie mit einen Abschnitt (10) die Stirnseite (11) des Schlauchendes (9) wenigstens größtenteils umgreift, ohne dass hierbei ein Hohlraum zwischen den aneinander liegenden Flächen der Stirnseite (10) und des Hülsenabschnitts (10) vorhanden ist, und dass die Hülse (7) weder direkt mit dem Nippel (2) verbunden noch am Nippel (2) befestigt ist.

2. Schlauchverbindung (1) nach Anspruch 1, **dadurch gekennzeichnet, dass** der innere Durchmesser am Ende (12) des die Stirnseite (10) des Schlauchendes (9) umgreifenden Hülsenabschnitts (10) kleiner ist als der Durchmesser des nächstgelegenen nach außen gerichteten Vorsprungs (3) des Nippels (2).
